# EUROPÄISCHE PATENTSCHRIFT

(11) **EP 1 465 794 B1**
(45) Veröffentlichungstag und Bekanntmachung des Hinweises auf die Patenterteilung: **24.08.2005**
(21) Anmeldenummer: 03708058.7
(22) Anmeldetag: 15.01.2003
(51) Int. Cl.: B60R 22/34

(54) **SICHERHEITSGURTAUFROLLER MIT KLEINBAUENDEM ROTATIONSDÄMPFER**
SAFETY BELT RETRACTOR HAVING A SMALL-STRUCTURE ROTATION DAMPER
ENROULEUR DE CEINTURE DE SECURITE DOTE D'UN AMORTISSEUR DE ROTATION D'ENCOMBREMENT REDUIT

(30) Priorität: 17.01.2002 DE 10201537
(43) Veröffentlichungstag der Anmeldung: 13.10.2004
(73) Patentinhaber: AUTOLIV DEVELOPMENT AB, 447 83 Vargarda (SE)
(72) Erfinder: LÖFFLER, Kay, 25421 Pinneberg (DE); WITTENBERG, Geert, Helge, Norderstedt 22848 (DE)
(74) Vertreter: Müller, Karl-Ernst
(86) Internationale Anmeldenummer: PCT/EP2003/000354
(87) Internationale Veröffentlichungsnummer: WO 2003/059705

(56) Entgegenhaltungen:
- WO-A-01/58728

## Beschreibung

Die Erfindung betrifft einen Sicherheitsgurtaufroller insbesondere in Kraftfahrzeugen, mit einer Gurtwelle als Träger eines darauf aufgewickelten Gurtbandes sowie mit einer fahrzeugsensitiv und/oder gurtbandsensitiv ansteuerbaren Blockiereinrichtung für die Gurtwelle, und mit einer im Blockierfall wirksam werdenden Kraftbegrenzungseinrichtung, welche aus einem mit einem viskosen Medium gefüllten Gehäuse mit wenigstens einer feststehenden Kontur und einer im Blockierfall an die Gurtwelle angekoppelten Gegenkontur besteht, so daß durch die Relativbewegung von Kontur und Gegenkontur das Medium zwischen den zugeordneten Flächen zerrieben wird.

Ein Sicherheitsgurtaufroller mit den vorgenannten Merkmalen ist in der WO 01/58728 A1 beschrieben. Bei dem bekannten Gurtaufroller ist das zylindrische Gehäuse der Kraftbegrenzungseinrichtung auf der Außenseite des Gurtaufrollergehäuses angeschlossen und mit der Gurtwelle bzw. insbesondere mit einem Torsionsstab gekoppelt. Nach einem Ausführungsbeispiel ist in dem mit insbesondere Silikon als viskosem Medium gefüllten Gehäuse der Kraftbegrenzungseinrichtung eine Abfolge von feststehenden Lochscheiben angeordnet, zwischen die mit dem in seiner Drehbewegung zu dämpfenden Torsionsstab verbundene Scheibenkolben mit einem radial abstehenden Kolbenflügel greifen. Bei der Relativbewegung von Scheibenkolben und Lochscheiben zueinander wird das Silikon zwischen den Scheibenflächen zerrieben, so daß der beabsichtigte Kraftverbrauch und damit die Kraftbegrenzung eintreten.

Mit dem bekannten Sicherheitsgurtaufroller bzw. dessen Kraftbegrenzungseinrichtung ist noch der Nachteil einer entsprechend großen axialen Baubreite verbunden, weil insbesondere die Anordnung eines ausreichende Scherkräfte zur Verfügung stellenden Scheibenpakets eine größere axiale Erstreckung des Gehäuses der Kraftbegrenzungseinrichtung erforderlich macht. Der Erfindung liegt daher die Aufgabe zugrunde, die Baugröße eines Sicherheitsgurtaufrollers mit den gattungsgemäßen Merkmalen zu verringern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht im einzelnen vor, daß auf einem stirnseitigen Ende der Gurtwelle eine die Gurtwelle umschließende und im Auslösefall über eine radial auslenkbare, an der Gurtwelle gelagerte Zahnscheibe als Blockiereinrichtung mit der Gurtwelle koppelbare Zentralwelle angeordnet ist, die gemeinsam mit einem äußeren Gehäusemantel das Gehäuse der Kraftbegrenzungseinrichtung bildet, und daß die Zentralwelle an einem eine Stirnwand des Gehäuses bildenden radialen Absatz wenigstens eine axial in den mit dem viskosen Medium gefüllten Gehäuseinnenraum vorstehende und sich in Umfangsrichtung erstreckende Schale aufweist, die mit einer an dem gegenüberliegend angeordneten gehäusefesten Deckel mit radialem Versatz zu der Schale formentsprechend angeordneten Gegenschale zusammenwirkt.

Mit der Erfindung ist der Vorteil verbunden, daß die Kraftbegrenzungseinrichtung mit ihrem Gehäuse die Gurtwelle auf einem Abschnitt umgreift, so daß die axiale Baubreite eines erfindungsgemäß ausgerüsteten Sicherheitsgurtaufrollers entsprechend gering gehalten ist. Aufgrund der insoweit in einer Ebene liegenden Stirnseiten von Gurtwelle und Kraftbegrenzungseinrichtung kann das an sich bekannte Blockiersystem eines selbstsperrenden Gurtaufrollers mit der fahrzeugsensitiv und/oder gurtbandsensitiv ansteuerbaren radial auslenkbaren Zahnscheibe zur Verriegelung der Gurtwelle mit der Kraftbegrenzungseinrichtung herangezogen werden, indem die die Gurtwelle umgreifende Zentralwelle die ansonsten bei üblichen Gurtaufrollern im Gehäuserahmen ausgebildete Verzahnung zum Eingriff der an der Gurtwelle radial auslenkbar gelagerten Zahnscheibe aufweist. Ebenfalls mit Blick auf die Baugrößenverringerung sind erfindungsgemäß die das viskose Medium, vorzugsweise Silikon, zwischen sich zerreibenden Flächen in einem axialen und damit parallel zur Gurtwelle liegenden Verlauf ausgerichtet, indem die Schale bzw. die Gegenschale axial von den Stirnwänden des Gehäuses der Kraftbegrenzungseinrichtung vorstehen und sich in Umfangsrichtung der Zentralwelle bzw. der Gurtwelle erstrecken. Zweckmäßig ist dabei, wenn nach einem Ausführungsbeispiel der Erfindung wenigstens zwei axial in den Gehäuseinnenraum vorstehende Schalen vorgesehen sind, zwischen die an dem Deckel formentsprechend angeordnete Gegenschalen greifen. Die Abfolge von Schalen und Gegenschalen ist dabei so zu treffen, daß jeweils eine Gegenschale in den Zwischenraum zwischen der Gehäusewand und der ersten Schale bzw. zwischen zwei Schalen greift. Je nach dem zur Verfügung stehenden radialen Einbauraum und dem zwischen den Zerreibungsflächen von Schalen bzw. Gegenschalen erforderlichen bzw. in Abhängigkeit von dem viskosen Medium zweckmäßigen Abstand kann eine Anzahl von im Wechsel angeordneten Schalen und Gegenschalen vorgesehen sein.

Soweit im Grundsatz die mit der Zentralwelle verbundenen Schalen auch unmittelbar an der Zentralwelle ausgebildet sein können, ist nach einem alternativen Ausführungsbeispiel vorgesehen, daß die Schalen Bestandteil eines in dem Gehäuseinnenraum angeordneten und formschlüssig mit der Zentralwelle verbundenen Schalenkolbens sind.

Die Schalen brauchen sich dabei nicht über den gesamten Umfang der Zentralwelle zu erstrecken, vielmehr reicht es aus, daß sich die Schalen über einen Teilumfang der Zentralwelle erstrecken, wobei insbesondere zwei sich gegenüberliegend angeordneten Schalenabschnitte ausgebildet sein können.

Es kann vorgesehen sein, daß die Zentralwelle gegen den Gehäusemantel und/oder gegen den die Zentralwelle umschließenden Deckel des Gehäuses der Kraftbegrenzungseinrichtung mittels entsprechend zwischengeschalteter Lagerringe abgestützt ist.

Zur Befestigung der Kraftbegrenzungseinrichtung an dem Sicherheitsgurtaufroller kann vorgesehen sein, daß der Gehäusemantel an seiner den Deckel übergreifenden Stirnseite mittels radial abstehender und nach Art eines Bajonettverschlusses in an dem Gurtaufrollergehäuse ausgebildete Aufnahmen eingreifender Vorsprünge befestigt ist.

In der Zeichnung ist ein Ausführungsbeispiel der Erfindung wiedergegeben, welches nachstehend beschrieben ist. Es zeigen:
- Fig. 1: einen Sicherheitsgurtaufroller in Seitenansicht,
- Fig. 2: die zugehörige Kraftbegrenzungseinrichtung in einer geschnitten Einzeldarstellung,
- Fig. 3: die Kraftbegrenzungseinrichtung gemäß Figur 2 in einer Stirnansicht,
- Fig. 4a, b: Schalenkolben und Gehäusedeckel mit den die Zerreibungsflächen aufweisenden Schalen bzw. Gegenschalen jeweils in einer Einzelansicht.

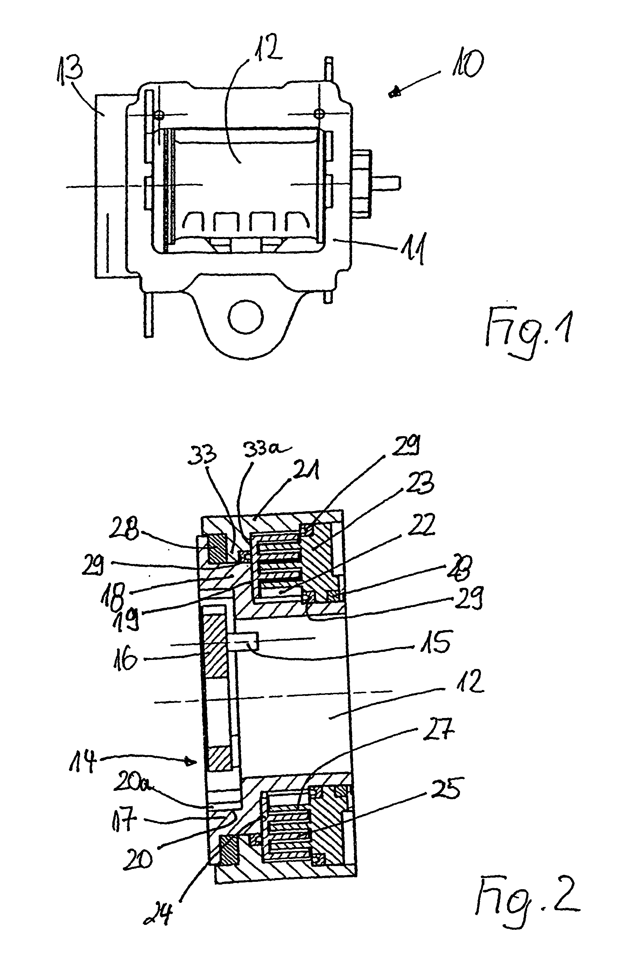

Der in Figur 1 dargestellte Sicherheitsgurtaufroller 10 hat ein U-förmiges Gurtaufrollergehäuse 11, in welchem eine Gurtwelle 12 gelagert ist. An einer Stirnseite der Gurtwelle 12 bzw. des Gurtaufrollergehäuses 11 ist ein Gehäuse 13 einer im einzelnen zu beschreibenden Kraftbegrenzungseinrichtung angeordnet.

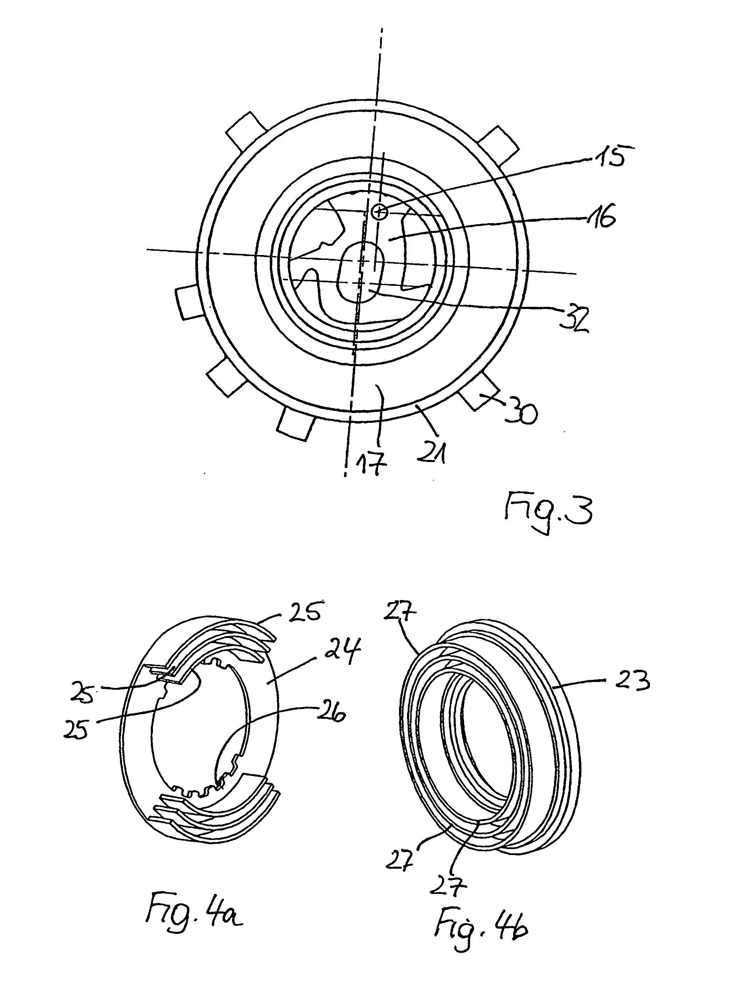

Wie aus Figur 2 näher ersichtlich ist, ist an der Stirnseite 14 der Gurtwelle 12 an einem Lagerzapfen 15 eine radial ausschwenkbare Zahnscheibe 16 gelagert, die mit einem Langloch 32 auf dem zugeordneten Ende der Gurtwelle 12 gelagert ist (Figur 3), so daß die radiale Auslenkung der Zahnscheibe 16 bei einer gurtbandsensitiven und/oder fahrzeugsensitiven Ansteuerung ermöglicht ist.

Auf das zugeordnete Stirnseite Ende der Gurtwelle 12 ist eine diese umschließende Zentralwelle 17 aufgeschoben, die an ihrem äußeren Ende mit einer nach außen vorspringenden Z-förmigen Abkröpfung 18 versehen ist. Damit wird an der der Gurtwelle 12 zugekehrten Innenseite der Zentralwelle 17 ein axialer Wandabschnitt 20 mit der daran ausgebildeten Verzahnung 20a zum Eingriff der Zahnscheibe 16 bei deren Auslenkung ausgebildet, während auf der Außenseite der Zentralwelle 17 bzw. von deren Abkröpfung 18 ein sich auswärts erstreckender radialer Wandabschnitt 19 ausgebildet wird.

Ein äußerer Gehäusemantel 21 umschließt unter Ausbildung eines Gehäuseinnenraumes 22 die Zentralwelle 17, wobei dem radialen Wandabschnitt 19 der Abkröpfung 18 mit einem axialen Abstand gegenüberliegend ein gehäusefester Deckel 23 angeordnet ist. Der Gehäusemantel 21 springt nach innen mit einem Vorsprung 33 gegen die Abkröpfung 18 der Zentralwelle 17 bzw. deren axial verlaufenden Abschnitt vor, so daß die dem Gehäuseinnenraum 22 zugekehrte Fläche 33a des Vorsprungs 33 mit dem radialen Wandabschnitt 19 der Zentralwelle 17 fluchtet. Somit wird durch entsprechende Wandabschnitte von Zentralwelle 17, des Gehäusemantels 21 und des Deckels 23 der Gehäuseinnenraum 22 umgrenzt. In dem Gehäuseinnenraum 22 ist bei dem dargestellten Ausführungsbeispiel ein gesonderter Schalenkolben 24 angeordnet, der gegen die aus dem radialen Wandabschnitt 19 der Abkröpfung 18 der Zentralwelle 17 und der Fläche 33a des Vorsprungs 33 des Gehäusemantels 21 gebildete Stirnwand anliegt, und von dem axial in den Gehäuseinnenraum 22 vorstehende Schalen 25 abragen. Wie sich dazu aus Figur 4a ergibt, sind im einzelnen drei mit radialem Abstand zueinander angeordnete Schalen 25 vorgesehen, die sich jeweils nur über einen Teilumfang des Schalenkolbens 24 erstrecken, wobei auf den gegenüberliegenden Seiten des Schalenkolbens 24 jeweils zwei Abfolgen von Schalensegmenten 25 angeordnet sind.

Wie sich aus der Zusammenschau der Figuren 2 und 4b ergibt, sind an dem gehäusefest angeordneten Deckel 23 formentsprechend ausgebildete Gegenschalen 27 angeordnet, die zwischen die Schalensegmente 25 des Schalenkolbens 24 greifen.

Zwischen der Abkröpfung 18 der Zentralwelle 17 und dem Gehäusemantel 21 ist ein Lagerring 28 angeordnet, so daß sich die Zentralwelle 17 gegen das Gehäuse 13 der Kraftbegrenzungseinrichtung bei ihrer Drehung abstützt; ein zweiter Lagerring ist zwischen dem Außenumfang der Zentralwelle 17 und dem diese umschließenden Deckel 23 des Gehäuses 13 der Kraftbegrenzungseinrichtung angeordnet. Weiterhin sind mehrere Dichtungen 29 zur Abdichtung des Gehäuseinnenraumes 22 angeordnet.

Wie aus Figur 3 ersichtlich, sind an dem äußeren Gehäusemantel 21 des Gehäuses 13 der Kraftbegrenzungseinrichtung radial abstehende Vorsprünge 30 angeordnet, die nach Art eines Bajonettverschlusses in an der Außenseite des Gurtaufrollergehäuses 11 angebrachte Aufnahmen eingreifen, so daß das Gehäuse 13 der Kraftbegrenzungseinrichtung mit dem Gurtaufrollergehäuse 11 formschlüssig verriegelbar ist.

Bei normalem Gebrauch des Sicherheitsgurtaufrollers dreht sich die Gurtwelle 12 innerhalb der sie umgebenden Zentralwelle 17, ohne daß die Kraftbegrenzungseinrichtung beaufschlagt wird. Im Auslösefall erfolgt fahrzeugsensitiv und/oder gurtbandsensitiv in einer an sich bekannten Weise eine Ansteuerung der Zahnscheibe 16, die in Eingriff mit der Verzahnung 20a an der Zentralwelle 17 eingesteuert wird, so daß die Zentralwelle 18 drehfest an die Gurtwelle 12 gekoppelt ist. Da die Zentralwelle 17 ihrerseits drehfest mit dem Schalenkolben 24 verbunden ist, wird bei Drehung der Gurtwelle 12 der Schalenkolben 24 ebenfalls in Drehung versetzt, wobei das in dem Gehäuseinnenraum 22 anstehende Silikon verdrängt und zwischen den Flächen von Schalen 25 und Gegenschalen 27 zerrieben wird. Durch den dabei verursachten Reibungswiderstand wird die Kraft auf ein sich über die Drehgeschwindigkeit der Gurtwelle 12 einstellendes Niveau begrenzt.

## Patentansprüche

1. Sicherheitsgurtaufroller insbesondere in Kraftfahrzeugen, mit einer Gurtwelle (12) als Träger eines darauf aufgewickelten Gurtbandes sowie mit einer fahrzeugsensitiv und/oder gurtbandsensitiv ansteuerbaren Blockiereinrichtung (16) für die Gurtwelle (12), und mit einer im Blockierfall wirksam werdenden Kraftbegrenzungseinrichtung, welche aus einem mit einem viskosen Medium gefüllten Gehäuse (22) mit wenigstens einer feststehenden Kontur (27) und einer im Blockierfall an die Gurtwelle angekoppelten Gegenkontur (25) besteht, so daß durch die Relativbewegung von Kontur (27) und Gegenkontur (25) das Medium zwischen den zugeordneten Flächen zerrieben wird, **dadurch gekennzeichnet, daß** auf einem stirnseitigen Ende der Gurtwelle (12) eine die Gurtwelle (12) umschließende und im Blockierfall über eine radial auslenkbare, an der Gurtwelle (12) gelagerte Zahnscheibe (16) als Blockiereinrichtung mit der Gurtwelle (12) koppelbare Zentralwelle (17) angeordnet ist, die gemeinsam mit einem äußeren Gehäusemantel (21) das Gehäuse (13) der Kraftbegrenzungseinrichtung bildet, und daß die Zentralwelle (17) an einem eine Stirnwand des Gehäuses (13) bildenden radialen Absatz (18) wenigstens eine axial in den mit dem viskosen Medium gefüllten Gehäuseinnenraum (22) vorstehende und sich in Umfangsrichtung erstreckende Schale (25) aufweist, die mit einer in dem gegenüberliegend angeordneten gehäusefesten Deckel (23) mit radialem Versatz zu der Schale (25) formentsprechend angeordneten Gegenschale (27) zusammenwirkt.

2. Sicherheitsgurtaufroller nach Anspruch 1, **dadurch gekennzeichnet, daß** wenigstens zwei axial in den Gehäuseinnenraum (22) vorstehende Schalen (25) vorgesehen sind, zwischen die an dem Deckel (23) formentsprechend angeordnete Gegenschalen (27) greifen.

3. Sicherheitsgurtaufroller nach Anspruch 1 oder 2, **dadurch gekennzeichnet, daß** die Schalen (25) Bestandteil eines in dem Gehäuseinnenraum (22) angeordneten und formschlüssig mit der Zentralwelle (17) verbundenen Schalenkolbens (24) sind.

4. Sicherheitsgurtaufroller nach einem der Ansprüche 1 bis 3, **dadurch gekennzeichnet, daß** sich die Schalen (25) über einen Teilumfang der Zentralwelle (17) erstrecken.

5. Sicherheitsgurtaufroller nach Anspruch 4, **dadurch gekennzeichnet, daß** zwei sich gegenüberliegend angeordneten Schalenabschnitte ausgebildet sind.

6. Sicherheitsgurtaufroller nach einem der Ansprüche 1 bis 5, **dadurch gekennzeichnet, daß** die Zentralwelle (17) gegen den Gehäusemantel (21) des Gehäuses (13) der Kraftbegrenzungseinrichtung mittels eines zwischengeschalteten Lagerrings (28) abgestützt ist.

7. Sicherheitsgurtaufroller nach einem der Ansprüche 1 bis 6, **dadurch gekennzeichnet, daß** zwischen der Zentralwelle (17) und dem diese umschließenden gehäusefesten Deckel (23) des Gehäuses (13) der Kraftbegrenzungseinrichtung ein Lagerring (28) angeordnet ist.

8. Sicherbeitsgurtaufroller nach einem der Ansprüche 1 bis 7, **dadurch gekennzeichnet, daß** der Gehäusemantel (21) an seiner den Deckel (23) übergreifenden Stirnseite mittels radial abstehender und nach Art eines Bajonettverschlusses in an dem Gurtaufrollergehäuse (11) ausgebildete Aufnahmen eingreifender Vorsprünge (30) befestigt ist.

## Claims

1. Safety belt retractor, especially in motor vehicles, having a belt shaft (12) as a carrier for a belt strap wound thereon, as well as a blocking mechanism (116), for the belt shaft (12) that can be actuated in a vehicle sensitive and/or belt strap sensitive manner, and with a force limiting device that becomes effective in the event of a blocking, wherein the force limiting device comprises a housing (22) that is filled with a viscous medium and has at least one fixed contour (27) and a counter contour (25) that is coupled to the belt shaft in the event of a blocking, so that due to the relative movement of contour (27) and counter contour (25), the medium is forced between the associated surfaces, **characterized in that** a central shaft (17) is disposed on a face end of the belt shaft (12), extends around the belt shaft (12), and in the event of a blocking can be coupled with the belt shaft (12) via a radially deflectable ratchet wheel (16) that is mounted on the belt shaft (12) as the blocking mechanism, wherein the central shaft (17) together with an outer housing wall (21), forms the housing (13) of the force limiting device, and **in that** on a radial shoulder (18) that forms an end wall of the housing (13), the central shaft (17) is provided with at least one socket (25) that extends in a peripheral direction and projects axially into the inner space 22 of the housing that is filled with the viscous medium, wherein the at least one socket cooperates with a counter socket (27) that is disposed in the oppositely arranged cover (23) that is secured to the housing, with the counter socket (27) being radially offset from, and having a corresponding shape to, the socket (25).

2. Safety belt retractor according to claim 1, **characterized in that** at least two sockets (25) are provided that project axially into the inner space (22) of the housing and between which engage counter sockets (27) that, with a corresponding shape, are disposed on the cover (23).

3. Safety belt retractor according to claim 1 or 2, **characterized in that** the sockets (25) are a component of a socket type piston (24) that is disposed in the inner space (22) of the housing and is positively connected with the central shaft (17).

4. Safety belt retractor according to one of the claims 1 to 3, **characterized in that** the sockets (25) extend over a partial periphery of the central shaft (17).

5. Safety belt retractor according to claim 4, **characterized in that** two oppositely disposed socket sections are formed.

6. Safety belt retractor according to one of the claims 4 to 5, **characterized in that** the central shaft (17) is supported against the housing wall (21) of the housing (13) of the force limiting device via an interposed bearing ring (28).

7. Safety belt retractor according to one of the claims 1 to 6, **characterized in that** a bearing ring (28) is disposed between the central shaft (17) and the cover (23) of the housing (13) of the force limiting device, which cover is secured to the housing and extends around the central shaft.

8. Safety belt retractor according to one of the claims 1 to 7, **characterized in that that** face of the housing wall (21) that extends around the cover (23) is secured via radially projecting projections (30) that, in the manner of a bayonet closure, engage in receiving means formed on the housing (11) of the belt retractor.

## Revendications

1. Enrouleur de ceinture de sécurité, notamment dans les véhicules à moteur, présentant une broche de ceinture (12) servant de support d'enroulement à la sangle de ceinture ainsi qu'un dispositif bloqueur (16) pour la broche de ceinture (12), qui réagit au véhicule et/ou à la sangle, et comportant un limiteur d'effort qui se déclenche en cas de blocage, lequel est constitué d'un boîtier (22) rempli d'un médium visqueux et comportant au moins un profil (27) fixe et un contre-profil (25) couplé en cas de blocage à la broche de ceinture, de telle sorte qu' en présence d' un mouvement relatif entre le profil (27) et le contre-profil (25), le médium est étalé entre les surfaces correspondantes, **caractérisé en ce qu'**une broche centrale (17) est disposée sur une extrémité frontale de la broche de ceinture (12), en englobant la broche de ceinture (12) et en pouvant être couplée en cas de blocage à la broche de ceinture (12) au moyen d'un disque denté (16) désaxable radialement et logé sur la broche de ceinture (12), lequel fait office de dispositif bloqueur, laquelle broche centrale (17) formant, avec l'enveloppe (21) extérieure du boîtier, le boîtier (13) du dispositif limiteur d'effort, et **en ce que** la broche centrale (17) présente sur un décrochement (18) radial formant une face frontale du boîtier (13) au moins une coquille (25) en saillie axiale dans l'espace interne (22) du boîtier rempli de médium visqueux et s'étendant sur le pourtour, qui agit conjointement avec une contre-coquille (27) selon une complémentarité de forme avec un décalage radial par rapport à la coquille (25) dans le couvercle (23) fixé, à l'opposé, au boîtier.

2. Enrouleur de ceinture de sécurité selon la revendication 1 **caractérisé en ce qu'**au moins deux coquilles (25) en saillie axiale dans l'espace interne (22) du boîtier sont prévues entre lesquelles s'engagent les contre-coquilles (27) disposées avec une complémentarité de forme sur le couvercle (23).

3. Enrouleur de ceinture de sécurité selon la revendication 1 ou 2 **caractérisé en ce que** les coquilles (25) font partie d'un piston à coquilles (24) disposé dans l'espace interne (22) du boîtier et relié par complémentarité de forme avec la broche centrale (17).

4. Enrouleur de ceinture de sécurité selon l'une des revendications 1 à 3 **caractérisé en ce que** les coquilles (25) s'étendent sur le pourtour partiel de la broche centrale (17).

5. Enrouleur de ceinture de sécurité selon la revendication 4 **caractérisé en ce que** deux tronçons de coquille sont disposés à l'opposé l'un de l'autre.

6. Enrouleur de ceinture de sécurité selon l'une des revendications 1 à 5 **caractérisé en ce que** la broche centrale (17) s'appuie contre l'enveloppe (21) du boîtier (13) du dispositif limiteur d'effort grâce à une bague d'appui (28) intercalée.

7. Enrouleur de ceinture de sécurité selon l'une des revendications 1 à 6 **caractérisé en ce qu'**une bague d'appui (28) est disposée entre la broche centrale (17) et le couvercle (23) fixé au boîtier (13), englobant cette dernière, du dispositif limiteur d'effort.

8. Enrouleur de ceinture de sécurité selon l'une des revendications 1 à 7, **caractérisé en ce que** l'enveloppe (21) du boîtier est fixé au niveau de sa face frontale surmontant le couvercle (23) à l'aide d'épaulements (30) en saillie radiale et s'engageant à la manière d'une fermeture baïonnette dans des logements conformés sur le boîtier de l'enrouleur de ceinture (11).
